(19) Europäisches Patentamt
European Patent Office
Office européen des brevets

(11) **EP 3 338 362 B1**

(12) **EUROPÄISCHE PATENTSCHRIFT**

(45) Veröffentlichungstag und Bekanntmachung des Hinweises auf die Patenterteilung:
**26.05.2021 Patentblatt 2021/21**

(21) Anmeldenummer: **16754494.9**

(22) Anmeldetag: **19.08.2016**

(51) Int Cl.:
*H02P 27/14* *(2006.01)*    *H02P 27/08* *(2006.01)*
*H02P 25/22* *(2006.01)*

(86) Internationale Anmeldenummer:
**PCT/EP2016/069721**

(87) Internationale Veröffentlichungsnummer:
**WO 2017/032716 (02.03.2017 Gazette 2017/09)**

(54) **ANTRIEBSSYSTEM**

DRIVE SYSTEM

SYSTEME DE PROPULSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.08.2015 DE 102015216007**

(43) Veröffentlichungstag der Anmeldung:
**27.06.2018 Patentblatt 2018/26**

(73) Patentinhaber: **Lenze Drives GmbH**
**32699 Extertal (DE)**

(72) Erfinder:
• **STICHWEH, Heiko**
  **31832 Springe (DE)**
• **KLUTE, Felix**
  **50259 Pulheim (DE)**
• **JONSKY, Torben**
  **30167 Hannover (DE)**
• **HOHNSBEIN, Thorsten**
  **31855 Aerzen (DE)**
• **GRABS, Volker**
  **37619 Bodenwerder (DE)**
• **BORCHERDING, Holger**
  **31840 Hessisch Oldendorf (DE)**

(74) Vertreter: **Patentanwälte**
**Ruff, Wilhelm, Beier, Dauster & Partner mbB**
**Kronenstraße 30**
**70174 Stuttgart (DE)**

(56) Entgegenhaltungen:
EP-A2- 0 947 377          DE-A1-102006 056 855
DE-A1-102008 019 569      US-A1- 2013 026 968
US-A1- 2015 236 634

**Beschreibung**

Die Erfindung betrifft ein Antriebssystem.

Antriebssysteme, beispielsweise in Form von dezentralen, permanenterregten Synchronmaschinen (PMSM) mit integriertem Wechselrichter, sind für eine Vielzahl an Applikationen relevant. Die Vorteile der dezentralen Antriebstechnik liegen in einem geringeren Verkabelungsaufwand, einer schnelleren Montage und einer höheren Flexibilität. Die Kosten für ein dezentrales System sind aktuell jedoch deutlich höher als für ein vergleichbares Schaltschrank-System. Des Weiteren ist durch die Integration des Wechselrichters die Nennleistung von dezentralen Systemen wegen thermischen Gründen beschränkt.

Für viele dezentrale Systeme sind neben den Kosten auch die Effizienz, die Systemleistungsdichte sowie die Dauerleistung relevant.

Die EP 0 947 377 A2, die US 2015/0236634 A1 und die US 2013/0026968 A1 zeigen jeweils Antriebssysteme, die einen Elektromotor aufweisen, wobei der Elektromotor mehrere Statorwicklungssysteme aufweist, die um einen elektrischen Phasenwinkel gegeneinander verdreht auf einem Stator angeordnet sind, und die einen Frequenzumrichter aufweisen, der mittels Brückenschaltungsanordnungen korrespondierende Spannungen für die Statorwicklungssysteme erzeugt.

Die DE 10 2008 019 569 A1 zeigt einen Wechselrichter zum Steuern des Anlegens einer Spannung von einer Energiequelle an einen Motor mit mehreren Wicklungen

Die DE 10 2006 056 855 A1 zeigt ein elektrisches Antriebssystem mit einer elektrischen Maschine, welche unabhängige Gruppen von mehrphasigen Wicklungen aufweist, wobei die Gruppen jeweils an eine Brückenschaltung angeschlossen sind und wobei die jeweiligen Sternpunkte der Wicklungen mit einem jeweiligen kapazitiven Spannungsteiler eines jeweils redundanten Bordnetzes verbunden sind.

Der Erfindung liegt die Aufgabe zugrunde, ein Antriebssystem zur Verfügung zu stellen, das eine hohe Systemleistungsdichte und eine hohe Effizienz aufweist.

Die Erfindung löst diese Aufgabe durch ein Antriebssystem nach Anspruch 1.

Das Antriebssystem weist einen Elektromotor auf, insbesondere mit gerader Phasenanzahl. Der Elektromotor weist ein erstes mindestens dreiphasiges Stator-Wicklungssystem und ein zweites mindestens dreiphasiges Stator-Wicklungssystem auf, wobei das erste und das zweite Stator-Wicklungssystem um einen elektrischen Phasenwinkel gegeneinander verdreht auf dem Stator angeordnet sind.

Das Antriebssystem weist weiter einen Wechselrichter bzw. Frequenzumrichter auf. Der Wechselrichter bzw. Frequenzumrichter weist eine erste Brückenschaltungsanordnung auf, die dazu ausgebildet ist, Potentiale bzw. Spannungen für das erste Wicklungssystem zu erzeugen. Der Wechselrichter bzw. Frequenzumrichter weist weiter eine zweite Brückenschaltungsanordnung auf, die dazu ausgebildet ist, Potentiale bzw. Spannungen für das zweite Wicklungssystem zu erzeugen, wobei die erste Brückenschaltungsanordnung und die zweite Brückenschaltungsanordnung in Reihe geschaltet sind. Der Wechselrichter bzw. Frequenzumrichter weist weiter eine Steuereinrichtung auf, die dazu ausgebildet ist, die erste Brückenschaltungsanordnung und die zweite Brückenschaltungsanordnung anzusteuern.

Der Frequenzumrichter kann mit dem Elektromotor eine (dezentrale) Funktionseinheit bilden. Hierzu kann der Frequenzumrichter mit dem Elektromotor mechanisch gekoppelt sein, beispielsweise auf ein Motorgehäuse aufgesetzt und mit diesem verschraubt sein.

Das erste und das zweite Wicklungssystem können um einen elektrischen Phasenwinkel von 30 Grad gegeneinander verdreht auf dem Stator angeordnet sein.

Die erste Brückenschaltungsanordnung und die zweite Brückenschaltungsanordnung können jeweils Leistungshalbleiter aufweisen, die bis 600 V Sperrspannung ausgelegt sind. Aufgrund der Reihenschaltung der Brückenschaltungsanordnungen halbieren sich die zu schaltendenden Spannungen im Vergleich zu Anordnungen, bei denen die Brückenschaltungsanordnungen parallel geschaltet sind. Daher ist es nicht notwendig, bei einer üblichen Speisung des Antriebs mit einem 3-phasigen Netz Leistungshalbleiter zu verwenden, die beispielsweise bis 1200 V Sperrspannung ausgelegt sind.

Die erste Brückenschaltungsanordnung und die zweite Brückenschaltungsanordnung können jeweils mindestens eine B6-Brücke oder drei Halbbrücken aufweisen.

Die Steuereinrichtung des Frequenzumrichters kann dazu ausgebildet sein, für jede Wicklung des ersten und des zweiten Wicklungssystems eine individuelle Stromregelung durchzuführen.

Das erste dreiphasige Stator-Wicklungssystem ist in Sternschaltung verschaltet, und weist drei Phasenanschlüsse und einen Nullleiteranschluss auf, wobei der Nullleiteranschluss mit dem Sternpunkt elektrisch verbunden ist. Entsprechend ist das zweite dreiphasige Stator-Wicklungssystem in Sternschaltung verschaltet und weist drei Phasenanschlüsse und einen Nullleiteranschluss auf, wobei der Nullleiteranschluss mit dem Sternpunkt elektrisch verbunden ist. Die erste Brückenschaltungsanordnung weist drei Ausgangsanschlüsse auf und die zweite Brückenschaltungsanordnung weist drei Ausgangsanschlüsse auf. Der Frequenzumrichter weist einen kapazitiven Spannungsteiler auf, der mit einer Zwischenkreisspannung beaufschlagt ist, wobei ein erster Abgriff des kapazitiven Spannungsteilers mit dem Nullleiteranschluss des ersten dreiphasigen Stator-Wicklungssystems elektrisch verbunden ist, wobei ein zweiter Abgriff des kapazitiven Spannungsteilers mit einem Verbindungsknoten der ersten und der zweiten Brückenschaltungsanordnung elektrisch verbunden ist, wobei ein dritter Abgriff des kapazitiven Spannungsteilers mit dem Nullleiteranschluss des zweiten dreiphasigen Stator-Wicklungssystems elektrisch verbunden ist, wobei die Ausgangsanschlüsse der ersten Brückenschaltungsanordnung mit einem zugehörigen der Phasenanschlüsse des ersten dreiphasigen Stator-Wicklungssystems elektrisch verbunden sind, und wobei die Ausgangsanschlüsse der zweiten Brückenschaltungsanordnung mit einem zugehörigen der Phasenanschlüsse des zweiten dreiphasigen Stator-Wicklungssystems elektrisch verbunden sind.

Ein erster Ausgangsanschluss der drei Ausgangsanschlüsse der ersten Brückenschaltungsanordnung kann mit einem ersten Phasenanschluss der drei Phasenanschüsse des ersten dreiphasigen Stator-Wicklungssystems elektrisch verbunden sein. Ein zweiter Ausgangsanschluss der drei Ausgangsanschlüsse der ersten Brückenschaltungsanordnung kann mit einem zweiten Phasenanschluss der drei Phasenanschüsse des ersten dreiphasigen Stator-Wicklungssystems elektrisch verbunden sein. Ein dritter Ausgangsanschluss der drei Ausgangsanschlüsse der ersten Brückenschaltungsanordnung kann mit einem dritten Phasenanschluss der drei Phasenanschüsse des ersten dreiphasigen Stator-Wicklungssystems elektrisch verbunden sein.

Ein erster Ausgangsanschluss der drei Ausgangsanschlüsse der zweiten Brückenschaltungsanordnung kann mit einem ersten Phasenanschluss der drei Phasenanschüsse des zweiten dreiphasigen Stator-Wicklungssystems elektrisch verbunden sein. Ein zweiter Ausgangsanschluss der drei Ausgangsanschlüsse der zweiten Brückenschaltungsanordnung kann mit einem zweiten Phasenanschluss der drei Phasenanschüsse des zweiten dreiphasigen Stator-Wicklungssystems elektrisch verbunden sein. Ein dritter Ausgangsanschluss der drei Ausgangsanschlüsse der zweiten Brückenschaltungsanordnung kann mit einem dritten Phasenanschluss der drei Phasenanschüsse des zweiten dreiphasigen Stator-Wicklungssystems elektrisch verbunden sein.

Der Elektromotor ist typisch eine rotierende elektrische Maschine, insbesondere in Form einer (permanenterregten) Drehstromsynchronmaschine oder einer Reluktanzmaschine, usw.

Die meisten am Markt verfügbaren Motoren sind klassische Drei-Phasen-Systeme. Der Vorteil von multiphasigen Maschinen liegt unter anderem in einer höheren Systemleistungsdichte, geringer Momentenwelligkeit und einer erhöhten Ausfallsicherheit. Die Nachteile von multiphasigen Maschinen liegen in einem erhöhten Aufwand für Leistungselektronik, Regelung und Verkabelung.

In dem Antriebssystem kann beispielsweise ein asymmetrischer, 6-phasiger, permanenterregter Synchronmotor mit integrierter Leistungselektronik verwendet werden. Der Motor weist beispielsweise zwei 3-phasige Systeme auf, die um 30° gegeneinander verdreht sind. Die Nutanzahl des Motors kann ein ganzzahliges Vielfaches von 12 sein.

Die Flussdichte des Motors kann derart gewählt werden, dass ein Anteil der dritten Harmonischen enthalten ist. Dies ist Voraussetzung für einen Drehmoment bildenden Anteil. Der Verlauf der Flussdichte kann derart gewählt werden, dass sich der Verlauf dem einer bürstenlosen Gleichstrommaschine annähert, der trapezförmig ist. Mittels der Erfindung werden beispielsweise die Vorteile der Synchronmaschine (Regelbarkeit) mit denen einer bürstenlosen Gleichstrommaschine (höhere Leistungsdichte) kombiniert.

Die Nachteile von multiphasigen Maschinen, die oben beschrieben sind, treffen für das vorliegende dezentrale Antriebskonzept nur eingeschränkt zu: der erhöhte Aufwand für die Leistungselektronik ist vorhanden, kann jedoch durch die Verwendung neuer Bauteile und innovativer Umrichtertopologien kompensiert bzw. überkompensiert werden. Ein erhöhter Verkabelungsaufwand ist durch das dezentrale Konzept nicht gegeben. Der Aufwand für die Regelung steigt, jedoch trägt die regelungstechnische Nutzung von Harmonischen im System zur Steigerung der Leistungsdichte bei.

In dem Antriebssystem können beispielsweise zwei unterschiedliche Umrichtertopologien verwendet werden, die beide 6 Phasen ansteuern können und gleichzeitig beliebige Stromverläufe in die Phasen einprägen können.

Die Umrichtertopologie verwendet eine Reihenschaltung von zwei B6-Wechselrichtern mit einer Rückführung des Nullleiters. Im Vergleich zu einem klassischen 3-Phasen-Wechselrichter wird hier eine zusätzliche B6-Brücke benötigt. Der vermeintliche Kostennachteil wird dadurch kompensiert, dass an jeder B6-Brücke statt der vollen Zwischenkreisspannung nur noch die halbe Zwischenkreisspannung anliegt. Somit besteht die Möglichkeit Bauteile mit 600V Sperrspannung einzusetzen, die kostengünstig und äußerst kompakt sind. Die Verwendung von MOSFETs wird durch den Aufbau ebenfalls möglich. Des Weiteren verringert sich der Aufwand für EMV-Maßnahmen durch die geringere Spannung deutlich, was aufgrund des Anteils der EMV-Maßnahmen von bis zu 30% der Umrichter-Platinenfläche ein signifikanter Vorteil ist. Da das System eine Einprägung der dritten Harmonischen im Strom voraussetzt, ist eine Rückführung der Nullleiter notwendig.

Denkbar ist nicht nur eine Verwendung von B6-Brücken, sondern auch der Ersatz einer jeweiligen B6-Brücke durch drei Halbbrücken. Halbbrücken kommen jetzt verstärkt mit 600V Sperrspannung auf den Markt, insbesondere in MOSFET-Technik.

Die Topologie ermöglichen es durch Rückführung bzw. Wegfall des Sternpunkts beliebige Spannungen und Ströme in die Phasen einzuprägen. Im Gegensatz zu herkömmlichen Umrichtern gilt nicht mehr, dass die Summe aller Ströme / Spannungen gleich Null sein muss. Dies ermöglicht eine optimale Anpassung des Umrichters an das Gesamtsystem und schafft die Voraussetzungen für die regelungstechnische Nutzung der Motoreigenschaften.

Der Frequenzumrichter wird derart betrieben, dass mit Hilfe einer erweiterten, feldorientierten Regelung die Einprägung einer dritten Harmonischen in das System erfolgt. Diese ermöglicht die Regelung auf eine Gleichgröße. Hierzu werden die beiden um 30° verdrehten 3-phasigen Systeme zuerst in ein statorfestes aß-System transformiert. Anschließend wird eine dq0-Transformation für das System durchgeführt, um es in ein rotorfestes Koordinatensystem zu transformieren. Anschließend werden die beiden entstehenden Nullkomponenten in ein ebenfalls mitrotierendes Koordinatensystem transformiert, das mit der dreifachen Grundfeldfrequenz rotiert. Die Gesamttransformation von Stranggrößen in das erweiterte dq3-System ergibt sich zu:

$$\underline{T}_{uvw \to dq3} = \frac{2}{3} * \begin{bmatrix} \cos(\varphi) & \cos\left(\varphi - \frac{2\pi}{3}\right) & \cos\left(\varphi + \frac{2\pi}{3}\right) & 0 & 0 & 0 \\ -\sin(\varphi) & -\sin\left(\varphi - \frac{2\pi}{3}\right) & -\sin\left(\varphi + \frac{2\pi}{3}\right) & 0 & 0 & 0 \\ \frac{\cos(3(\gamma + \varphi))}{2} & \frac{\cos(3(\gamma + \varphi))}{2} & \frac{\cos(3(\gamma + \varphi))}{2} & \frac{\sin(3(\gamma + \varphi))}{2} & \frac{\sin(3(\gamma + \varphi))}{2} & \frac{\sin(3(\gamma + \varphi))}{2} \\ 0 & 0 & 0 & \cos\left(\varphi - \frac{\pi}{6}\right) & \cos\left(\varphi - \frac{5\pi}{6}\right) & \cos\left(\varphi + \frac{\pi}{2}\right) \\ 0 & 0 & 0 & -\sin\left(\varphi - \frac{\pi}{6}\right) & -\sin\left(\varphi - \frac{5\pi}{6}\right) & -\sin\left(\varphi + \frac{\pi}{2}\right) \\ -\frac{\sin(3(\gamma + \varphi))}{2} & -\frac{\sin(3(\gamma + \varphi))}{2} & -\frac{\sin(3(\gamma + \varphi))}{2} & \frac{\cos(3(\gamma + \varphi))}{2} & \frac{\cos(3(\gamma + \varphi))}{2} & \frac{\cos(3(\gamma + \varphi))}{2} \end{bmatrix}$$

Für den Verlauf des Luftspaltfelds wird eine $2\pi$-periodische Funktion angenommen, in der neben der Grundwelle die dritte Harmonische vorhanden ist. Für den Verkettungsfluss $\psi_c$ gilt dann mit dem elektrischen Winkel $\varphi$ und den Fourierkoeffizienten $a_1$ und $a_3$:

$$\psi_c = a_1 * \cos(\varphi) + a_3 * \cos(3 * \varphi).$$

Für das elektrische Moment $M_{el}$ gilt:

$$M_{el} = p * \frac{\delta\,\Psi^T(\varphi)}{\delta\,\varphi} * \underline{I}$$

mit der Polpaarzahl $p$, dem Stromvektor $\underline{I}$ und dem Vektor der Flussverkettungen $\underline{\psi}^T$. Einsetzen der Werte und eine Transformation in das dq3-System mit der Matrix $\underline{T}_{uvw \to dq3}$ liefert für den Momentenvektor:

$$M_{el} = \frac{3}{2} * p * \widehat{\psi}_c \begin{bmatrix} 0 \\ a_1 \\ 0 \\ 0 \\ a_1 \\ 3a_3 \end{bmatrix}^T * \begin{bmatrix} I_{d1} \\ I_{q1} \\ I_{d0} \\ I_{d2} \\ I_{q2} \\ I_{q0} \end{bmatrix}.$$

Hervorzuheben ist hier, dass die dritte Harmonische des Verkettungsflusses in Kombination mit dem Strom $I_{q0}$ zu einem konstanten Moment beiträgt. Der Strom $I_{q0}$ bewirkt eine Einprägung der dritten Harmonischen in den Stranggrößen. Für den Verlauf der Ströme $I_0$ in Stranggrößen bedeutet dies, dass sie die Form $I_{0,abs} = I_3 * \cos(3 * \varphi)$ bzw. $I_{0,xyz} = I_3 * \sin(3 * \varphi)$ haben. Alle Ströme können, wie in der feldorientierten Regelung üblich, mit linearen Regelverfahren geregelt werden. Im Vergleich zum 6-phasigen Fall bewirkt ein Nullstrom in einem dreiphasigen Motor ein pulsierendes Moment und kann deswegen nicht genutzt werden. Weitere Harmonische im Verlauf der Flussverkettung können mit der hier vorgestellten Variante ebenfalls beschrieben und als Störgrößen bestimmt werden.

Die Ausführungsform der Erfindung wird nachfolgend unter Bezugnahme auf die Zeichnungen detailliert beschrieben. Hierbei zeigen schematisch:

Fig. 1    eine erfindungsgemäße Ausführungsform des Antriebssystems und

Fig. 2    ein nicht zur Erfindung gehörendes Antriebssystem.

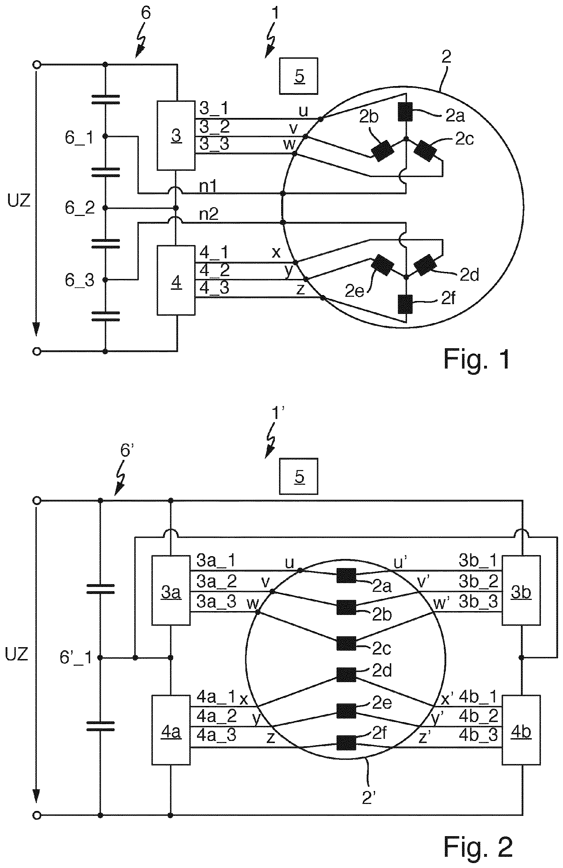

Fig. 1 zeigt ein Antriebssystem 1 in einer ersten Ausführungsform. Das Antriebssystem 1 weist einen Elektromotor 2, beispielsweise in Form einer permanenterregten Synchronmaschine, und einen Frequenzumrichter auf.

Der Elektromotor 2 weist zwei jeweils dreiphasige Stator-Wicklungssysteme auf, die jeweils in Sternschaltung verschaltet sind. Die Stator-Wicklungssysteme weisen jeweils drei Phasenanschlüsse u, v, w bzw. x, y, z und einen Nullleiteranschluss n1 bzw. n2 auf, wobei die Nullleiteranschlüsse n1 bzw. n2 mit dem jeweiligen Sternpunkt elektrisch verbunden sind. Das erste und das zweite Wicklungssystem sind um einen elektrischen Phasenwinkel von 30 Grad gegeneinander verdreht angeordnet.

Das erste Wicklungssystem weist drei Wicklungen 2a, 2b, 2c in Sternschaltung auf. Das zweite Wicklungssystem weist entsprechend drei Wicklungen 2d, 2e, 2f in Sternschaltung auf. Die Wicklung 2a ist zwischen den Anschluss u und den Anschluss n1 eingeschleift. Die Wicklung 2b ist zwischen den Anschluss v und den Anschluss n1 eingeschleift. Die Wicklung 2c ist zwischen den Anschluss w und den Anschluss n1 eingeschleift. Die Wicklung 2d ist zwischen den Anschluss x und den Anschluss n2 eingeschleift. Die Wicklung 2e ist zwischen den Anschluss y und den Anschluss n2 eingeschleift. Die Wicklung 2f ist zwischen den Anschluss z und den Anschluss n2 eingeschleift.

Der Frequenzumrichter weist eine erste Brückenschaltungsanordnung 3 in Form einer B6-Brücke und eine zweite Brückenschaltungsanordnung 4 ebenfalls in Form einer B6-Brücke auf. Die erste Brückenschaltungsanordnung 3 und die zweite Brückenschaltungsanordnung 4 sind in Reihe geschaltet, wobei die Reihenschaltung mit der Zwischenkreisspannung UZ beaufschlagt ist. Die erste Brückenschaltungsanordnung 3 weist drei Ausgangsanschlüsse 3_1, 3_2, 3_3 auf. Entsprechend weist die zweite Brückenschaltungsanordnung 4 drei Ausgangsanschlüsse 4_1, 4_2, 4_3 auf. Eine Steuereinrichtung 5 des Frequenzumrichters steuert die erste Brückenschaltungsanordnung 3 und die zweite Brückenschaltungsanordnung 4 an. Die B6-Brücken 3 und 4 weisen jeweils Leistungshalbleiter auf, die bis maximal 600 V Sperrspannung ausgelegt sind.

Der Frequenzumrichter weist weiter einen kapazitiven Spannungsteiler 6 auf, der mit der Zwischenkreisspannung UZ beaufschlagt ist. Ein erster Abgriff 6_1 des kapazitiven Spannungsteilers 6 ist mit dem Nullleiteranschluss n1 des ersten dreiphasigen Stator-Wicklungssystems elektrisch verbunden. Ein zweiter Abgriff 6_2 des kapazitiven Spannungsteilers 6 ist mit einem Verbindungsknoten der ersten und der zweiten Brückenschaltungsanordnung 3, 4 elektrisch verbunden. Ein dritter Abgriff 6_3 des kapazitiven Spannungsteilers 6 ist mit dem Nullleiteranschluss n2 des zweiten dreiphasigen Stator-Wicklungssystems elektrisch verbunden.

Die Ausgangsanschlüsse 3_1, 3_2, 3_3 der ersten Brückenschaltungsanordnung 3 sind mit einem zugehörigen der Phasenanschlüsse u, v, w des ersten dreiphasigen Stator-Wicklungssystems elektrisch verbunden (3_1 mit u, 3_2 mit v, 3_3 mit w). Entsprechend sind die Ausgangsanschlüsse 4_1, 4_2, 4_3 der zweiten Brückenschaltungsanordnung 4 mit einem zugehörigen der Phasenanschlüsse x, y, z des zweiten dreiphasigen Stator-Wicklungssystems elektrisch verbunden(4_1 mit x, 4_2 mit y, 4_3 mit z).

Die Steuereinrichtung 5 ist dazu ausgebildet, für jede Wicklung des ersten und des zweiten Wicklungssystems eine individuelle Stromregelung durchzuführen. Die Steuereinrichtung 5 steuert die Brücken 3 und 4 derart an, dass in der Flussdichte des Motors 2 ein Anteil der dritten Harmonischen enthalten ist. Der Verlauf der Flussdichte wird derart gewählt, dass der Verlauf sich dem einer bürstenlosen Gleichstrommaschine annähert, der trapezförmig ist.

Fig. 2 zeigt ein nicht zur Erfindung gehörendes Antriebssystem 1'. Das Antriebssystem 1' weist einen Elektromotor 2', beispielsweise in Form einer permanenterregten Synchronmaschine, und einen Frequenzumrichter auf.

Der Elektromotor 2' weist zwei jeweils dreiphasige Stator-Wicklungssysteme auf. Das erste dreiphasige Stator-Wicklungssystem weist sechs Phasenanschlüsse u, v, w, u', v', w' auf. Das zweite dreiphasige Stator-Wicklungssystem weist entsprechend sechs Phasenanschlüsse x, y, z, x', y', z' auf. Das erste und das zweite Wicklungssystem sind um einen elektrischen Phasenwinkel von 30 Grad gegeneinander verdreht angeordnet.

Das erste Wicklungssystem weist drei Wicklungen 2a, 2b, 2c auf. Das zweite Wicklungssystem weist entsprechend drei Wicklungen 2d, 2e, 2f auf. Die Wicklung 2a ist zwischen die Anschlüsse u und u' eingeschleift. Die Wicklung 2b ist zwischen die Anschlüsse v und v' eingeschleift. Die Wicklung 2c ist zwischen die Anschlüsse w und w' eingeschleift. Die Wicklung 2d ist zwischen die Anschlüsse x und x' eingeschleift. Die Wicklung 2e ist zwischen die Anschlüsse y und y' eingeschleift. Die Wicklung 2f ist zwischen die Anschlüsse z und z' eingeschleift.

Der Frequenzumrichter weist eine erste Brückenschaltungsanordnung 3a in Form einer B6-Brücke und eine zweite Brückenschaltungsanordnung 4a ebenfalls in Form einer B6-Brücke auf. Die erste Brückenschaltungsanordnung 3a und die zweite Brückenschaltungsanordnung 4a sind in Reihe geschaltet, wobei die Reihenschaltung mit der Zwischenkreisspannung UZ beaufschlagt ist. Die erste Brückenschaltungsanordnung 3a weist drei Ausgangsanschlüsse 3a_1, 3a_2, 3a_3 auf. Entsprechend weist die zweite Brückenschaltungsanordnung 4a drei Ausgangsanschlüsse 4a_1, 4a_2, 4a_3 auf. Die Steuereinrichtung 5 des Frequenzumrichters steuert die erste Brückenschaltungsanordnung 3a und die zweite Brückenschaltungsanordnung 4a an. Die B6-Brücken 3a und 4a weisen jeweils Leistungshalbleiter auf, die bis maximal 600 V Sperrspannung ausgelegt sind.

Zusätzlich weist der Frequenzumrichter eine dritte Brückenschaltungsanordnung 3b in Form einer B6-Brücke und eine vierte Brückenschaltungsanordnung 4b ebenfalls in Form einer B6-Brücke auf. Die dritte Brückenschaltungsanordnung 3b und die vierte Brückenschaltungsanordnung 4b sind in Reihe geschaltet, wobei die Reihenschaltung mit der Zwischenkreisspannung UZ beaufschlagt ist. Die dritte Brückenschaltungsanordnung 3b weist drei Ausgangsanschlüsse 3b_1, 3b_2, 3b_3 auf. Entsprechend weist die vierte Brückenschaltungsanordnung 4b drei Ausgangsanschlüsse 4b_1, 4b_2, 4b_3 auf. Die Steuereinrichtung 5 des Frequenzumrichters steuert die dritte Brückenschaltungsanordnung 3b und die vierte Brückenschaltungsanordnung 4b an. Die B6-Brücken 3b und 4b weisen jeweils Leistungshalbleiter auf, die bis maximal 600 V Sperrspannung ausgelegt sind.

Ein kapazitiver Spannungsteiler 6' des Frequenzumrichters ist mit der Zwischenkreisspannung UZ beaufschlagt. wobei ein Abgriff 6'_1 des kapazitiven Spannungsteilers 6' mit einem Verbindungsknoten der ersten Brückenschaltungsanordnung 3a, der zweiten Brückenschaltungsanordnung 4a, der dritten Brückenschaltungsanordnung 3b und der vierten Brückenschaltungsanordnung 4b elektrisch verbunden ist. Die Ausgangsanschlüsse 3a_1, 3a_2, 3a_3 der ersten Brückenschaltungsanordnung 3a und die Ausgangsanschlüsse 3b_1, 3b_2, 3b_3 der dritten Brückenschaltungsanordnung 3b sind mit einem zugehörigen der Phasenanschlüsse u, v, w, u', v', w' des ersten dreiphasigen Stator-Wicklungssystems elektrisch verbunden.

Die Erfindung bietet die folgenden Vorteile.

Durch die Nutzung der dritten Harmonischen kann die Verlustleistung gesenkt werden. Für den dezentralen Antrieb bedeutet dies bei gleichbleibenden Maximaltemperaturen eine Leistungssteigerung für den gleichen Bauraum oder eine geringere Temperatur bei gleicher Leistung.

Das erfindungsgemäße Antriebssystem ermöglicht, trotz höherer Anzahl an Bauteilen, die Verwendung von kompakten und effizienten Leistungshalbleitern bei gleichbleibenden bzw. sogar leicht geringeren Kosten. Die in Fig. 2 gezeigte Ausführungsform ermöglicht durch die Verdoppelung der verwendeten B6-Brücken eine Leistungssteigerung, da die Strangspannung und somit die Leistung um den Faktor $\sqrt{3}$ erhöht wird.

Die geringeren elektrischen Verluste ergeben sich aus einer Abflachung des Stromverlaufs und somit einer Reduzierung der Kupferverluste, da in diese der Strom quadratisch eingeht.

Die Verwendung von 2 B6-Brücken ermöglicht eine Verteilung der Verlustleistung der Wechselrichter auf mehrere Module. Durch diese Verteilung und die damit verbundene örtliche Entzerrung sind eine bessere Wärmeabfuhr und damit eine Reduzierung der maximalen Temperatur der Wechselrichter möglich. Dieser Vorteil ist insbesondere für hochintegrierte Antriebe mit hoher Leistungsdichte von großer Bedeutung.

Als Gesamtsystem bietet die neuartige Kombination aus Motor, Frequenzumrichter und Regelungstechnik somit eine gesteigerte Systemleistungsdichte bei relativ gesehen geringerer Verlustleistung und somit einen erhöhten Wirkungsgrad.

## Patentansprüche

1. Antriebssystem (1), aufweisend:

  - einen Elektromotor (2, 2'), wobei der Elektromotor (2, 2') aufweist:

    - ein erstes dreiphasiges Stator-Wicklungssystem und
    - ein zweites dreiphasiges Stator-Wicklungssystem, wobei das erste und das zweite Stator-Wicklungssystem um einen elektrischen Phasenwinkel gegeneinander verdreht auf dem Stator angeordnet sind, und

  - einen Frequenzumrichter, wobei der Frequenzumrichter aufweist:

    - eine erste Brückenschaltungsanordnung (3; 3a), die dazu ausgebildet ist, Spannungen für das erste Wicklungssystem zu erzeugen,
    - eine zweite Brückenschaltungsanordnung (4; 4a), die dazu ausgebildet ist, Spannungen für das zweite Wicklungssystem zu erzeugen, wobei die erste Brückenschaltungsanordnung (3; 3a) und die zweite Brückenschaltungsanordnung (4; 4a) in Reihe geschaltet sind, und
    - eine Steuereinrichtung (5), die dazu ausgebildet ist, die erste Brückenschaltungsanordnung (3; 3a) und die zweite Brückenschaltungsanordnung (4; 4a) anzusteuern,

  **dadurch gekennzeichnet, dass**
  - das erste dreiphasige Stator-Wicklungssystem in Sternschaltung verschaltet ist, drei Phasenanschlüsse (u, v, w) aufweist und einen Nullleiteranschluss (n1) aufweist, wobei der Nullleiteranschluss (n1) mit dem Sternpunkt elektrisch verbunden ist,

- das zweite dreiphasige Stator-Wicklungssystem in Sternschaltung verschaltet ist, drei Phasenanschlüsse (x, y, z) aufweist und einen Nullleiteranschluss (n2) aufweist, wobei der Nullleiteranschluss (n2) mit dem Sternpunkt elektrisch verbunden ist,

- wobei die erste Brückenschaltungsanordnung (3) drei Ausgangsanschlüsse (3_1, 3_2, 3_3) aufweist und die zweite Brückenschaltungsanordnung (4) drei Ausgangsanschlüsse (4_1, 4_2, 4_3) aufweist, und

- wobei der Frequenzumrichter aufweist:

- einen kapazitiven Spannungsteiler (6), der mit einer Zwischenkreisspannung (UZ) beaufschlagt ist, wobei ein erster Abgriff (6_1) des kapazitiven Spannungsteilers (6) mit dem Nullleiteranschluss (n1) des ersten dreiphasigen Stator-Wicklungssystems elektrisch verbunden ist, wobei ein zweiter Abgriff (6_2) des kapazitiven Spannungsteilers (6) mit einem Verbindungsknoten der ersten und der zweiten Brückenschaltungsanordnung (3, 4) elektrisch verbunden ist, wobei ein dritter Abgriff (6_3) des kapazitiven Spannungsteilers (6) mit dem Nullleiteranschluss (n2) des zweiten dreiphasigen Stator-Wicklungssystems elektrisch verbunden ist, wobei die Ausgangsanschlüsse (3_1, 3_2, 3_3) der ersten Brückenschaltungsanordnung (3) mit einem zugehörigen der Phasenanschlüsse (u, v, w) des ersten dreiphasigen Stator-Wicklungssystems elektrisch verbunden sind, und wobei die Ausgangsanschlüsse (4_1, 4_2, 4_3) der zweiten Brückenschaltungsanordnung (4) mit einem zugehörigen der Phasenanschlüsse (x, y, z) des zweiten dreiphasigen Stator-Wicklungssystems elektrisch verbunden sind.

2. Antriebssystem (1) nach Anspruch 1, **dadurch gekennzeichnet, dass**

- das erste und das zweite Wicklungssystem um einen elektrischen Phasenwinkel von 30 Grad gegeneinander verdreht angeordnet sind.

3. Antriebssystem (1) nach Anspruch 1 oder 2, **dadurch gekennzeichnet, dass**

- die erste Brückenschaltungsanordnung (3, 3a) und die zweite Brückenschaltungsanordnung (4, 4a) jeweils Leistungshalbleiter aufweisen, die bis 600 V Sperrspannung ausgelegt sind.

4. Antriebssystem (1) nach einem der vorhergehenden Ansprüche, **dadurch gekennzeichnet, dass**

- die erste Brückenschaltungsanordnung (3, 3a) und die zweite Brückenschaltungsanordnung (4, 4a) jeweils mindestens eine B6-Brücke oder drei Halbbrücken aufweisen.

5. Antriebssystem (1) nach einem der vorhergehenden Ansprüche, **dadurch gekennzeichnet, dass**

- die Steuereinrichtung (5) dazu ausgebildet ist, für jede Wicklung des ersten und des zweiten Wicklungssystems eine individuelle Stromregelung durchzuführen.

6. Antriebssystem (1) nach einem der vorhergehenden Ansprüche, **dadurch gekennzeichnet, dass**

- der Elektromotor (2, 2') eine, insbesondere permanenterregte, Synchronmaschine ist.

**Claims**

1. A drive system (1), comprising:

- an electric motor (2, 2'), wherein the electric motor (2, 2') comprises:

- a first three-phase stator winding system, and
- a second three-phase stator winding system, wherein the first and second stator winding systems are arranged on the stator in a manner rotated through an electrical phase angle in relation to each other; and

- a frequency converter, wherein the frequency converter comprises:

- a first bridge circuit arrangement (3; 3a) which is configured to generate voltages for the first winding system,

- a second bridge circuit arrangement (4; 4a) which is configured to generate voltages for the second winding system, wherein the first bridge circuit arrangement (3; 3a) and the second bridge circuit arrangement (4; 4a) are connected in series, and
- a control device (5) which is configured to actuate the first bridge circuit arrangement (3; 3a) and the second bridge circuit arrangement (4; 4a),

**characterized in that**
- the first three-phase stator winding system is star-connected, comprises three phase terminals (u, v, w) and a neutral conductor terminal (n1), wherein the neutral conductor terminal (n1) is electrically connected to the neutral point,
- the second three-phase stator winding system is star-connected, comprises three phase terminals (x, y, z) and a neutral conductor terminal (n2), wherein the neutral conductor terminal (n2) is electrically connected to the neutral point,
- wherein the first bridge circuit arrangement (3) comprises three output terminals (3_1, 3_2, 3_3), and the second bridge circuit arrangement (4) comprises three output terminals (4_1, 4_2, 4_3), and
- wherein the frequency converter comprises:

- a capacitive voltage divider (6), to which an intermediate circuit voltage (UZ) is applied, wherein a first tap (6_1) of the capacitive voltage divider (6) is electrically connected to the neutral conductor terminal (n1) of the first three-phase stator winding system, wherein a second tap (6_2) of the capacitive voltage divider (6) is electrically connected to a connecting node of the first and second bridge circuit arrangements (3, 4), wherein a third tap (6_3) of the capacitive voltage divider (6) is electrically connected to the neutral conductor terminal (n2) of the second three-phase stator winding system, wherein the output terminals (3_1, 3_2, 3_3) of the first bridge circuit arrangement (3) are electrically connected to a respective associated phase terminal (u, v, w) of the first three-phase stator winding system, and wherein the output terminals (4_1, 4_2, 4_3) of the second bridge circuit arrangement (4) are electrically connected to a respective associated phase terminal (x, y, z) of the second three-phase stator winding system.

2. The drive system (1) according to claim 1, **characterized in that**

- the first and second winding systems are rotated through an electrical phase angle of 30 degrees in relation to each other.

3. The drive system (1) according to claim 1 or 2, **characterized in that**

- the first bridge circuit arrangement (3, 3a) and the second bridge circuit arrangement (4, 4a), respectively, comprise power semiconductors which are rated for a blocking voltage of up to 600 V.

4. The drive system (1) according to any of the preceding claims, **characterized in that**

- the first bridge circuit arrangement (3, 3a) and the second bridge circuit arrangement (4, 4a), respectively, comprise at least one B6 bridge or three half-bridges.

5. The drive system (1) according to any of the preceding claims, **characterized in that**

- the control device (5) is configured to execute an individual current control function for each winding on the first and second winding systems.

6. The drive system (1) according to any of the preceding claims, **characterized in that**

- the electric motor (2, 2') is a synchronous machine, in particular permanently-excited synchronous machine.


**Revendications**

1. Système d'entraînement (1), comprenant :

- un moteur électrique (2, 2'), le moteur électrique (2, 2') comprenant :

- un premier système d'enroulement de stator triphasé et

- un deuxième système d'enroulement de stator triphasé, le premier et le deuxième système d'enroulement de stator triphasé étant montés sur le stator décalés l'un par rapport à l'autre d'un angle de phase électrique, et

- un variateur de fréquence, le variateur de fréquence comprenant :

- un premier arrangement de circuit en pont (3 ; 3a), qui est configuré pour générer des tensions pour le premier système d'enroulement,

- un deuxième arrangement de circuit en pont (4 ; 4a), qui est configuré pour générer des tensions pour le deuxième système d'enroulement, le premier arrangement de circuit en pont (3 ; 3a) et le deuxième arrangement de circuit en pont (4 ; 4a) étant branchés en série, et

- un dispositif de commande (5), qui est configuré pour commander le premier arrangement de circuit en pont (3 ; 3a) et le deuxième arrangement de circuit en pont (4 ; 4a),

**caractérisé en ce que**

- le premier système d'enroulement de stator triphasé est connecté en un circuit étoile, possède trois bornes de phase (u, v, w) et possède une borne de neutre (n1), la borne de neutre (n1) étant reliée électriquement au point d'étoile,

- le deuxième système d'enroulement de stator triphasé est connecté en un circuit étoile, possède trois bornes de phase (x, y, z) et possède une borne de neutre (n2), la borne de neutre (n2) étant reliée électriquement au point d'étoile,

- le premier arrangement de circuit en pont (3) possédant trois bornes de sortie (3_1, 3_2, 3_3) et le deuxième arrangement de circuit en pont (4) possédant trois bornes de sortie (4_1, 4_2, 4_3), et

- le variateur de fréquence possédant :

- un diviseur de tension capacitif (6), qui est alimenté par une tension de circuit intermédiaire (UZ), une première prise (6_1) du diviseur de tension capacitif (6) étant reliée électriquement à la borne de neutre (n1) du premier système d'enroulement de stator triphasé, une deuxième prise (6_2) du diviseur de tension capacitif (6) étant reliée électriquement à un nœud de connexion du premier et du deuxième arrangement de circuit en pont (3, 4), une troisième prise (6_3) du diviseur de tension capacitif (6) étant reliée électriquement à la borne de neutre (n2) du deuxième système d'enroulement de stator triphasé, les bornes de sortie (3_1, 3_2, 3_3) du premier arrangement de circuit en pont (3) étant reliées électriquement à l'une associée des bornes de phase (u, v, w) du premier système d'enroulement de stator triphasé, et les bornes de sortie (4_1, 4_2, 4_3) du deuxième arrangement de circuit en pont (4) étant reliées électriquement à l'une associée des bornes de phase (x, y, z) du deuxième système d'enroulement de stator triphasé.

2. Système d'entraînement (1) selon la revendication 1, **caractérisé en ce que**

- le premier et le deuxième système d'enroulement sont montés décalés d'un angle de phase électrique de 30 degrés l'un par rapport à l'autre.

3. Système d'entraînement (1) selon la revendication 1 ou 2, **caractérisé en ce que**

- le premier arrangement de circuit en pont (3, 3a) et le deuxième arrangement de circuit en pont (4, 4a) comportent respectivement des semiconducteurs de puissance qui sont conçus avec une tension de blocage jusqu'à 600 V.

4. Système d'entraînement (1) selon l'une des revendications précédentes, **caractérisé en ce que**

- le premier arrangement de circuit en pont (3, 3a) et le deuxième arrangement de circuit en pont (4, 4a) comportent respectivement au moins un pont B6 ou trois demi-ponts.

5. Système d'entraînement (1) selon l'une des revendications précédentes, **caractérisé en ce que**

- le dispositif de commande (5) est configuré pour effectuer une régulation de courant individuelle pour chaque enroulement du premier et du deuxième système d'enroulement.

6. Système d'entraînement (1) selon l'une des revendications précédentes, **caractérisé en ce que**

- le moteur électrique (2, 2') est une machine synchrone, notamment à excitation permanente.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0947377 A2
- US 20150236634 A1
- US 20130026968 A1
- DE 102008019569 A1
- DE 102006056855 A1